# EUROPÄISCHE PATENTSCHRIFT

(11) **EP 0 956 514 B1**
(45) Veröffentlichungstag und Bekanntmachung des Hinweises auf die Patenterteilung: **10.12.2003**
(21) Anmeldenummer: 98906869.7
(22) Anmeldetag: 13.01.1998
(51) Int. Cl.: G02B 5/32, G03B 21/60

(54) **BILDSCHIRM FÜR LASERRÜCKPROJEKTION**
LASER BACK-PROJECTION SCREEN
ECRAN DE RETROPROJECTION LASER

(30) Priorität: 31.01.1997 DE 19703592
(43) Veröffentlichungstag der Anmeldung: 17.11.1999
(73) Patentinhaber: EADS Deutschland GmbH, 85521 Ottobrunn (DE); HSM Holographic Systems München GmbH, 85652 Ottersberg (DE)
(72) Erfinder: GNÄDIG, Klaus, (DE); DAUSMANN, Günther, D-85435 Erding (DE); HALLDORSSON, Thorsteinn, D-81925 München (DE)
(86) Internationale Anmeldenummer: EP9800135
(87) Internationale Veröffentlichungsnummer: WO98034135

(56) Entgegenhaltungen:
- EP-A- 0 344 125
- EP-A- 0 349 884
- EP-A- 0 349 947
- DE-A- 3 419 098
- FR-A- 2 640 772
- FR-A- 2 699 289
- US-A- 4 610 499
- US-A- 4 984 856

## Beschreibung

Die Erfindung betrifft einen Bildschirm für Laserrückprojektion, der selektiv für eine oder mehrere Laserwellenlängen, die einfallende, spektral schmalbandige Laserstrahlung in einen vorherbestimmten Raumwinkel vorwärtsstreut, aber gleichzeitig das störende, spektral breitbandige Umgebungslicht stark absorbiert.

Die Notwendigkeit der Visualisierung von Informationen nimmt zur Zeit enorm zu. Für die Displaytechnik eröffnet sich dadurch ein Markt mit vielen Segmenten, großem Umsatz und hohen Wachstumsraten. In der Funktionskette Bildaufnahme, Übertragung und Verarbeitung von Informationen sind in den vergangenen Jahren große Fortschritte erzielt worden. Die Qualität der heutigen Darstellungsverfahren jedoch ist diesem hohen Entwicklungsstand nicht mehr angepaßt. Die heute verbreiteten Displays wie Kathodenstrahlröhre und Flüssigkristallanzeige sind in ihrem Verbesserungspotential begrenzt.

Die Laserdisplaytechnik, d.h. der sequentielle Aufbau von Bildern durch Laserstrahlumlenkung ohne Nachleuchten des Bildschirms, bietet ein inhärentes Potential zur Erzeugung hoch qualitativer Bilder. Die Bildinformation wird seriell mit geeigneten elektro-optischen oder akusto-optischen Modulatoren dem Laserstrahl aufmoduliert. Die Strahlablenkung erfolgt mit Hilfe von mechanischen Spiegelscannern, ähnlich wie bei heutigen Fernsehröhren zeilenförmig über die Bildfläche. Auch sind Laserquellen als Ersatz für thermische Strahler wie Halogenlampen und Entladungslampen in den herkömmlichen Lichtventilprojektoren mit Flüssigkristall - oder Mikrospiegelmatrizen, von mehreren Frojektorherstellern in Vorbereitung.

Die thermischen Strahler sind grundsätzlich in ihrer Lichtstärke durch ihre interne Betriebstemperatur begrenzt ( Schwarzkörperstrahlung ). Die spektrale Verteilung der Grundfarben Rot, Grün und Blau (RGB) kann nur durch entsprechende Filterung und Intensitätsabgleich optimiert werden. Außerdem strahlt eine solche Lampe gleichmäßig in alle Raumrichtungen. Für die Abstrahlung in eine bestimmte Projektionsrichtung ist - trotz Rückspiegels - nur ein Teil der Gesamtstrahlung verfügbar.

Dagegen ist beim Laser theoretisch jede Strahlleistung herstellbar und steht in einem eng gebündelten Strahl nahezu verlustfrei zur Verfügung. Außerdem kann infolge der spektralen Schmalbandigkeit seine Leistung für die benötigte Grundfarbe voll umgesetzt werden. In der letzten Jahren wurden Halbleiterlaser und Festkörperlaser mit einer wesentlich höheren Effizienz (Lumen/Watt) und deutlich größerer Lebensdauer (über 50.000 Std.) entwickelt als mit den üblichen Lampen erreicht wird.

Die prinzipielle Eignung von Laserstrahlen für die Displaytechnik wurde schon früh erkannt. Von Hitachi wurde 1970 eine Farbfernsehen - Großprojektion demonstriert. Ähnliche Anlagen zeigten General Electric, Texas-Instruments, General Telephone and Electronic Labs., sowie andere in den siebziger Jahren. Damals besaßen jedoch die verfügbaren Laser (Gaslaser) einen geringen Wirkungsgrad. waren voluminös und für eine wirtschaftliche Serienherstellung ungeeignet.

Infolge der deutlichen technologischen Fortschritte in der Entwicklung der Laserquellen, Bildmodulatoren und Bildscanner eröffnen sich für die Laserdisplaytechnik heute völlig neue technische und wirtschaftliche Potentiale:
― die Möglichkeit der Realisierung der geeigneten Grundfarben, Rot, Grün und Blau mit einem hohen Wirkungsgrad,
― eine sehr hohe Güte der Projektion hinsichtlich Helligkeit, Kontrast und Auflösung und
― eine wirtschaftliche Herstellbarkeit durch Miniaturisierung und funktionale Integration.

Der Laser ist eine kohärente, monochromatisch gebündelte Lichtquelle. Jede erforderliche Strahldichte kann prinzipiell realisiert werden. Außerdem kann infolge der Schmalbandigkeit seine Leistung für die benötigte Grundfarbe voll umgesetzt werden. Bei dem sequentiellen punktuellen Bildaufbau am Schirm ist das Bild in jeder Entfernung scharf und kann auch auf schiefe und gekrümmte Flächen projiziert werden.

Ein Bild kann mit allen Projektoren grundsätzlich auf zweierlei Weise am Bildschirm generiert werden: in Aufprojektion bzw. Frontprojektion und in Rück- bzw. Durchprojektion. In dem ersten Fall wird das Bild auf die Fläche des Schirmes geworfen, auf der es auch betrachtet wird. Der Schirm sollte in diesem Fall möglichst stark das auffallende Licht diffus zurückstreuen. In dem zweiten Fall wird das Bild auf die entgegengesetzte Seite des Schirmes (von hinten) projiziert. Der Schirm sollte dann möglichst gut das Licht durchlassen, aber gleichzeitig über einen größeren Winkel vorwärtsstreuen. Die Erfindung betrifft ausschließlich dieses zweite Verfahren der Rückprojektion oder Durchprojektion.

Schirme für Rückprojektionen mit den üblichen Bildprojektoren (Beamern) sind in verschiedenen Größen mit verschiedenen Bildwandmateralien auf dem Markt erhältlich. Der Schirm streut die auf jeden Bildpunkt auf der Rückseite ein einfallende gerichtete Lichtstrahlen durch Streuung an der Oberfläche oder auch durch Mehrfachstreuung im Inneren einer dünnen Schicht des Materials. Dadurch wird erreicht, daß auf der Seite des Betrachters der Bildpunkt als aufgeweitetes Strahlenbündel aus der Bildfläche diffus herausstrahlt. Dieses Phänomen ist z.B. bei den Mattscheiben, die auch in Suchern usf. von Kameras eingesetzt werden, wohlbekannt.

Da nun die Lichtstreuung an der Oberfläche oder innerhalb des Bildmaterials nicht alleine zur Weiterleitung des Lichtes in Vorwärtsrichtung, sondern auch zu einem gewissen Anteil zu einer Rückstreuung des Lichtes aus der Projektionsfläche führt, ist diese Lichtübertragung immer mit Verlusten behaftet. Ein zweiter Nachteil dieser Schirme ist der, daß helles Licht aus dem Zuschauerraum auch in den Schirm hineintritt und dabei nicht nur durch den Schirm geleitet wird, sondern auch wiederum zu einem gewissen Anteil zurückgestreut wird. Dadurch erscheint der Schirm in einem beleuchtendem Raum immer hell, - je nach dem Verhältnis der Vorwärts- zur Rückstreuintensität, in unterschiedlichen Grauabstufungen.

Um diese Verluste zu kompensieren und die Schirmaufhellung zu vermindern, werden häufig sogenannte Linsenrasterbild - bzw. Lentikularwände eingesetzt. Mit einem feinen dichten Linsenraster auf der Lichtaustrittsfläche zum Zuschauer, wird der Winkel der Vorwärtsstreuung eingeengt. Dadurch wird das Bild nur in einem engen Winkelbereich um die Normale sichtbar und aufgehellt. Gleichzeitig wird der Aufnahmewinkel der Projektionswand für seitliches, z.B. von der Seitenbeleuchtung des Raumes stammendem Störlicht, das dem Zuschauer zugeleitet wird, reduziert. Insgesamt erscheinen diese Bildwände trotz Beleuchtung aus dem Zuschauerraum dann dunkler und erbringen gleichzeitig ein helleres Bild. Es versteht sich, daß große Bildwände dieser letzteren Art in der Herstellung sehr teuer sind. Da sie jedoch nur begrenzte Verbesserungen bringen, kann die Projektion nur in halb abgedunkelten, aber nicht in hellen Räumen oder bei Tageslicht in der erwünschten Qualität erfolgen.

Bei Aufprojektionen auf Bildschirme wird der rückstreuende Belag des Schirmes so ausgelegt, daß das Licht des Projektors vom Schirm in einen eingeengten Bildwinkel zurückgestreut wird, mit dem gleichen Vorteil wie bei den verbesserten Rückprojektionsschirmen.

Ein großer Vorteil bei der Verwendung von Lasern zur Projektion ist nun, daß durch die dadurch mögliche höhere Strahldichte gegenüber anderen Lichtquellen die Helligkeit des Bildes auf dem Schirm deutlich angehoben werden kann. Jedoch kann dieser Vorteil nur im begrenzten Maße zur Erhöhung der Bildqualität umgesetzt werden, denn hier gilt das gleiche wie in der Fernsehtechnik: erst durch die Entstehung des Bildes auf einem schwarzen Schirm können sowohl der vom Gerät hergestellte inhärente Bildkontrast und als auch die Farbsättigung unverfälscht dem Zuschauer übermittelt werden. Dies liegt darin begründet, daß der minimale, vom Auge wahrnehmbare Kontrast proportional zu der Grundhelligkeit des Bildes ist (Weber-Fechnersches Gesetz), d.h. je höher die Leuchtdichte, desto geringer der wahrnehmbare Kontrast.

Bei der Farbwiedergabe in hellen Räumen addiert sich die meist graue oder weiße Grundhelligkeit des Schirmes mit der von dem Projektionsgerät hergestellten Farbvalenz, damit ändert sich die Sättigung der Farbtöne des Gesamtbildes gleichzeitig mit der Abnahme des Kontrastes.

Dieses Problem der hochwertigen Bildwiedergabe von Kontrast und Farben in hellen Räumen tritt, sowohl in der Aufprojektion, als auch in der Rückprojektion auf. Die Erfindung betrifft ausschließlich das zweite Verfahren der Rückprojektion, d.h. die Wiedergabe des durch einen Schirm geleiteten Bildes und die Auslegung und Herstellung eines solchen Bildschirmes für die Laserprojektion.

Die bereits erläuterte Maßnahme zur Erhöhung der Bildhelligkeit am Schirm durch Einengung des Abstrahlwinkels mit gleichzeitiger Unterdrückung des Umgebungslichtes, die den Schirm grau erscheinen läßt, verbessert auch die Kontrast- und Farbwiedergabe. Je dunkler der Schirm, desto besser ist die Wiedergabe.

In der Farbfernsehtechnik mit selbstleuchtenden Kathodenstrahlröhren konnte dies durch die Verwendung von Grauglas in der Bildröhre und mit Hilfe der sogenannten "black-matrix" - Schirme erreicht werden. Die Glasschicht des Grauglases dämpft das durch sie hindurchgehende Licht auf die Hälfte. Die maximale Bildleuchtdichte wird entsprechend reduziert. Umgebungslicht. das auf die weiß reflektierende Leuchtstoffschicht hinter dem Grauglas trifft und damit das Bildfeld aufhellt, muß das Glas zweimal durchlaufen und wird daher auf 25% reduziert. Dadurch entsteht günstigenfalls eine Kontrastverdopplung. Eine weitere Maßnahme besteht in dem Auftragen einer "black-matrix" auf die Leuchstoffschicht. Die nicht benutzten Teile der Leuchtstoffschicht (Punktzwischenräume, Landungsreserve) werden von vorne gesehen mit einer schwarzen Schicht abgedeckt. In dunklen Räumen liefern z.B. heutige Kathodenstrahlröhren Kontrastverhältnisse von mehr als 1:200. Im praktischen Betrieb liegen sie jedoch bei 1:40, siehe z.B. das Buch "Fernsehtechnik", Hüttig - Verlag, Heidelberg, 1988.

Im Vergleich dazu bringen Lichtventilprojektoren in dunklen Räumen einen Kontrast von 1:60 und in hellen Räumen, bedingt durch die Streuung der Projektionswand, von nur 1:6. In den heute weitverbreiteten Großbildwänden, bei denen mehrere nebeneinander gereihte Kathodenstrahlröhren auf eine große Rückprojektionsleinwand projiziert werden, geht jedoch der letztgenannte Kontrastgewinn des "black-matrix" - Schirmes wieder verloren.

Laserprojektoren besitzen gegenüber anderen Projektionsverfahren einen sehr hohen Primärkontrast von 1:300. Dies ermöglicht deshalb in halbdunklen Räumen eine deutlich bessere Wiedergabe als mit den herkömmlichen Projektoren. In sehr hellen Räumen, bzw. bei Tageslicht kommt dieser inhärente Vorteil jedoch nicht mehr zum Tragen, denn der Kontrast wird auch hier vorwiegend durch die Streueigenschaften und die Grundhelligkeit des Schirms bestimmt.

Der Erfindung liegt die Aufgabe zugrunde, vorzugsweise für eine Laserprojektion einen Rückprojektionsschirm anzugeben, der das spektral schmalbandige Laserlicht in einer oder mehreren Farben mit hohem Wirkungsgrad in einen definierten Raumwinkel diffus vorwärtsstreut, aber das breitbandige Umgebungslicht aus dem Zuschauerraum weitgehend ungehindert durchläßt und einem Lichtabsorber zuleitet.

Durch diesen erfindungsgemäßen Projektionsschirm soll erreicht werden, daß große Bilder auch bei normaler Umgebungsbeleuchtung in hellen Räumen bzw. bei Tageslicht sich gegen die helle Umgebung abheben. Zweitens soll der ursprünglich im Gerät verfügbare Kontrast auch am Schirm dem Betrachter wiedergegeben werden. Drittens soll die Farbbeeinflußung durch das Umgebungslicht minimiert werden.

Diese Aufgabe wird im Sinne der Erfindung durch einen holografischen Bildschirm gemäß Anspruch 1 gelöst. Objekt der Aufnahme dieses holografischen Schirms ist vorzugsweise ein angepaßter Schirm, der vorzugsweise mit allen verwendeten Laser Projektionswellenlängen in das Hologramm einbelichtet wird. Bei der Aufnahme wird dafür gesorgt, daß der Schirm mit dem Objektstrahl so ausgeleuchtet wird, daß seine Vorwärtsstreucharakteristik die gleiche ist, wie sie später in der Anwendung erwünscht ist. Als Referenzstrahl bei der holografischen Aufnahme dient dabei ein aufgeweitetes Strahlenbündel, das von einem entsprechenden Ort ausgeht, wie der spätere Projektionsstrahl. Zur Wiedergabe kann bei einem Hologramm entweder ein flächenhafter Strahl wie bei der Aufnahme, oder ein punktuell oder in Zeilen tastender (scannender) Strahl verwendet werden.

Das Hologramm wird vorzugsweise als sogenanntes off-axis - Transmissionshologramm aufgenommen, d.h. geeignet für die Betrachtung in transmittiertem Licht. Es können sowohl "dünne" als auch "dicke" Hologramme als Bildschirmhologramme verwendet werden. Die Entscheidung, welche Art verwendet wird, richtet sich nach den verfügbaren Aufnahmemateralien, ihren Kosten, dem angestrebten Beugungswirkungsgrad und der Art der Wiedergabe. Mit dicken Hologrammen kann insbesondere eine hohe Winkel- und Wellenlängenselektivität bei der Wiedergabe erreicht werden.

In der hier vorgeschlagenen Aufnahme eines dünnen Hologramms in einem Schritt wird der Schirm als zweidimensionale Gitterstruktur einbelichtet. Es wird die bekannte Aufnahmegeometrie nach Leith und Upatnieks verwendet mit einem divergenten Referenzstrahl. Der Schirm erscheint bei der Wiedergabe mit einem Projektionsstrahl, der dem Referenzstrahl entspricht, als virtuelles Bild (in der ersten Beugungsordnung) und kann als solcher auch direkt verwendet werden. Die störenden Lichtanteile in der 0-ten Beugungsordnung und den anderen Beugungsordnung werden minimiert und außerhalb des Hologramms absorbiert. Wie bei anderen Hologrammen dieser Art erscheint das Bild des Schirmes hinter der Hologrammplatte am gleichen Ort wie bei der Aufnahme. Solche holografischen Bildschirme sind für viele Anwendungen geeignet z. B. für PC-Schirme, um den Leseabstand zum Schirm virtuell zu vergrößern und damit die Akkommodation der Augen zu erleichtern.

Es wird für weitere Anwendungen vorgeschlagen, das Transmissionshologramm des Schirmes in zwei Stufen herzustellen. Der erste Schritt ist dann der gleiche wie der oben beschriebene. Nur wird hier anstatt des virtuellen Bildes das reelle Bild des Schirmes als Objekt für eine zweite Aufnahme verwendet und dahingehend optimiert. Dies hat den Vorteil, dass damit die Lage des Schirmbildes bei der Wiedergabe gegenüber der Hologrammplatte frei gewählt werden kann. Für viele Anwendungen z.B. für Video, Fernsehen oder Großprojektion ist es sinnvoll, dass der Schirm in der Ebene des Hologramms liegt. Mit dieser Aufnahmetechnik ist es auch möglich, den Schirm vor das Hologramm heraustreten zu lassen, was insbesondere für Werbezwecke oder künstlerische Gestaltung von Bildern von Interesse ist.

Ein weißer holografischer Schirm wird, wie vorhin erläutert, vorzugsweise durch Aufnahme eines Schirmes mit allen verwendeten Laserwellenlängen, z.B. rot, grün, und blau (RGB) in das gleiche Hologramm hergestellt. Hier ergeben sich drei verschiedene Ausführungsmöglichkeiten. Als erstes können drei Belichtungen aller Farben in eine Aufnahmeschicht durchgeführt werden. Als zweites können mehrere Schichten unterschiedlicher spektraler Sensitivität, an die verschiedenen Laserwellenlängen angepasst, aufgestapelt werden. Als drittes können die verschiedenen Aufnahmematerialien nebeneinander angeordnet sein, beispielsweise punktförmig als RGB-Tripel innerhalb jedes Bildpunktes in Dreiecksanordnung, wie die Phosphore einer Fernseh-Delta-Schattenmaskenröhre oder als drei benachbarte vertikale RGB-Streifen, wie die Phosphore in der bekannten Fernseh-Trinitronröhre.

Eine Aufnahme von drei unterschiedlichen Farben zuzuordnenden Hologrammen in einer einzigen dünnen Schicht, wie in dem ersten Alternativverfahren vorgeschlagen, hat das Problem, dass jede einzelne Gitterstruktur auch das Licht der anderen Wellenlänge beugt. Bei einem solchen Schirm entstehen bei dreifarbiger Projektion 9 verschiedene Streukeulen in 3 unterschiedlichen Farben, von denen drei zu einer weißen Keule zusammenfallen, die dann das eigentliche Betrachtungslicht liefert. Die anderen Streukeulen können durch später angegebene Maßnahmen, wie Lamellenstrukturen unterdrückt werden.

In einem Stapelaufbau der Schichten können z.B. drei verschiedene. an die Farben angepaßte Aufnahmemateralien verwendet werden. Durch die Verwendung von drei lateral angeordneten Schichten für die verschiedenen Farben, kann zusätzlich das Farbübersprechen, wie bei der Kathodenstrahlröhre eines Farbfernsehers unterbunden werden.

Die Erfindung sieht weiterhin vor, daß "dicke" Transmission - Hologramme für die Schirmaufnahmen verwendet werden, vor allem in Anwendungen, wo eine hohe Selektivität des Hologramms in Bezug auf Wiedergabewellenlänge und Einstrahlrichtung von Vorteil ist.

In dicken Hologrammen bildet sich bei der Aufnahme ein Volumengitter in der Aufnahmeschicht von in der Regel 5-30 µm Dicke. Bei der Wiedergabe gilt dann wegen der Interferenz benachbarter gegeneinander phasenverschobenen Teilstrahlen die Bragg - Bedingung für die konstruktive Interferenz. Damit ist eine starke Beugungseffizienz für die Aufnahmewellenlängen und die Beleuchtungsrichtung des Referenzstrahles in den Schirm integriert und breitbandiges diffuses bzw. auch Laserlicht von der Seite des Betrachters geht zum größten Teil ungehindert durch, siehe dazu z.B. das Buch "Holographie" von J. Eichler und G. Ackermann, Springer Verlag 1993.

Wie bei einem "dünnen" Hologramm können entweder mehrere Aufnahmen des Schirmes bei unterschiedlichen Farben in der gleichen Hologrammschicht, in unterschiedlichen aneinandergereihten oder nebeneinander angeordneten Schichten mit angepaßter Farbempfindlichkeit aufgenommen werden.

Der besondere Vorteil des holografischen Bildschirms mit sowohl dünnen als auch dicken Aufnahmemateralien ist seine Eigenschaft, nur ein Bild des ursprünglich diffus streuenden Objektschirmes bei der Rückprojektion mit den Aufnahmewellenlängen für den Zuschauer zu erzeugen, aber das diffuse breitbandige Licht aus dem Zuschauerraum fast ungehindert durchzulassen, wo es dann nachträglich absorbiert wird. Die Hologramme können vorzugsweise auf einer Glasscheibe aufgezogen sein, die vorzugsweise mit einer Entspiegelung für sichtbares Licht versehen ist.

Zur Unterbindung des Störlichtes von 0-ter und -1 Ordnung sieht die Erfindung Zusatzhologramme bzw. Blendenstrukturen vor.

Durch den Einbau von optischen Zusatzelementen in den Strahlengang des Referenzstrahles oder des Objektstrahls kann das holografische Bild des Schirms beeinflußt werden. Damit kann z.B. der Abstrahlwinkel des holografischen Schirmes gegenüber dem Original schirm in Elevation und Azimuth verändert werden, die Helligkeitsverteilung über den Schirm kann anders eingestellt werden und Bildfehler der Projektionsoptik können nachträglich verbessert werden.

Die Herstellung eines solchen erfindungsgemäßen Rückprojektors und holografischen Bildschirmes ist oben beispielhaft beschrieben worden. Sie kann jedoch auf einer Vielzahl von verschiedenen Wegen und in unterschiedlichen Schritten erfolgen, die dem Fachmann bekannt und verständlich sind. Die Erfindung wird im folgenden anhand der in den Figuren teilweise schematisch dargestellten Ausführungsbeispiele näher beschrieben. Es zeigen:
- Fig. 1: einen erfindungsgemäßen Rückprojektor mit Transmissionshologramm und Lichtfalle,
- Fig. 2: einen Rückprojektor nach der Erfindung mit Transmissionshologramm, Lichtfalle und Lamellenblendenfolie zur Absorption von Störlicht,
- Fig. 3: einen Rückprojektor mit Transmissionshologramm, Lichtfalle und Reflexionshologramm zur Rückweisung von Störlicht,
- Fig. 4: die Aufnahme eines Leith-Upatnieks off-axis Hologramms des Schirmes mit divergentem Referenzstrahl,
- Fig. 5: die Aufnahme eines Transmissionsmasters des Bildschirmes,
- Fig. 6: Aufnahme eines Reflexionsmasters des Bildschirmes,
- Fig. 7: die Aufnahme eines Schirmhologramms vom Transmissionsmaster.
- Fig. 8: die Aufnahme eines Schirmhologramms vom Reflexionsmaster,
- Fig. 9: die Aufnahme eines Zusatzreflexionshologramms mit Hilfe eines Spiegels,
- Fig. 10: die Aufnahme eines Zusatzreflexionshologramms, und
- Fig. 11: einen Querschnitt durch einen beispielhaften, fertigen holografischen Rückprojektionsschirm mit 3 holografischen Aufnahmeschichten für die Farben rot, grün und blau.

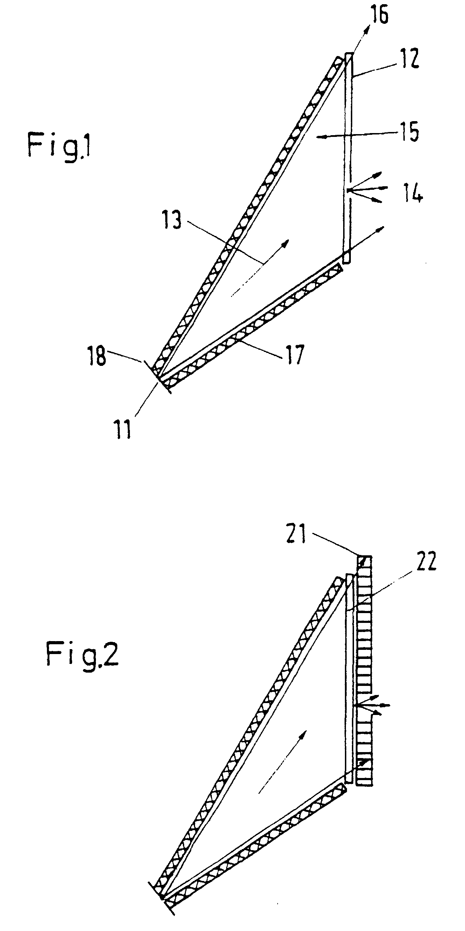

Fig. 1 zeigt den Querschnitt eines Rückprojektors. Das Licht aus dem Projektor 11, der annähernd eine Punktlichtquelle darstellt, fällt auf die Rückseite des Schirmes 12 und kann z.B. punktuell oder zeilenförmig gescannt sein oder in einem raumfesten aufgeweiteten Strahl 13 auffallen. Durch die Bildmodulation wird das Bild dann seriell oder parallel je nach Projektionsverfahren in allen Farben auf die Hologrammfläche geschrieben, von wo es in den Zuschauerraum als diffuses Licht 14 vorwärtsgestreut wird. Beide Hologrammtypen. das dünne und das dicke Hologramm, haben die Eigenschaft, daß sie das diffuse spektral breite Umgebungslicht 15 aus dem Zuschauerraum und auch gerichtetes breitbandiges Licht von z.B. Scheinwerfern fast ungehindert durchlassen.

Damit der Schirm insgesamt für den Betrachter als schwarze oder dunkle Fläche erscheint, muß wie die Fig. 1 zeigt, eine Lichtfalle (Absorber) 17 vorhanden sein, die dieses Störlicht vollständig absorbiert. Das Hologramm wird deshalb vorzugsweise als Frontseite eines geschlossenen lichtdichten Gehäuses (wie beim Fernseher) integriert. Eine eingebaute Lichtfalle, die den Projektionsstrahl dicht umschließt wird jede Lichtstrahlung, die nicht entlang des Strahlenkegels zwischen Projektionsort und Hologramm verläuft, effizient absorbieren. Ein gewisser Anteil des Umgebungslichtes wird wegen seiner eingebauten Streufunktion aus dem Zuschauerraum entlang des Streukegels zum Ort der Projektion gelangen. Mit dem Einbau einer Pupille 18 an diesem Ort kann verhindert werden, daß dieses Licht in Rückwärtsrichtung zu dem holographischen Bildschirm zurückgelangt.

Ein Nachteil dieser Anordnung ist der Lichtanteil der 0-Ordnung, der bei dünnen Hologrammen am stärksten auftritt. Dieses Störlicht 16, das zwar bei einem effizienten Hologramm gegenüber dem Nutzstrahl wesentlich schwächer ist, tritt in der momentane Strahlrichtung ohne Umlenkung aus dem Hologramm heraus. Da dieser Strahlenkegel auch die Bildinformation trägt, kann er für verschiedene Anwendungen genutzt werden. Als Störlicht kann die 0-Ordnung, zusammen mit den schwachen Anteilen der -1-Ordnung durch geschicktes Ausblenden absorbiert werden.

Dies zeigt die Anordnung in Fig. 2, die in den anderen Einzelheiten bis auf den Zusatz einer Lamellenfolie der Fig. 1 entspricht. Hier wird eine kommerziell bekannte Lamellenfolie 21 über das Hologramm 22 auf der Austrittsseite zusätzlich aufgezogen. Diese dünne für sichtbares Licht transparente Kunstofffolie mit etwa 1 mm Stärke ist über ihre ganze Fläche mit feinen Lamellen mit einer Strukturgröße von etwa 100 µm versehen. Die Lamellen sind geschwärzt und absorbieren jeden Lichtstrahl ab einem bestimmten Neigungswinkel zur Lamellenachse. Es können entweder Lamellenstrukturen die senkrecht oder mit einer anderen Neigung zur Folienfläche verlaufen eingesetzt werden. Durch eine entsprechende Auslegung des Projektionswinkels auf den holografischen Schirm, der Dicke der Lamellenfolie und Einstellung der Abstrahlkeule des Hologramms kann dafür gesorgt werden, daß das Nutzlicht in der + 1-Ordnung weitgehend durchgeleitet wird, aber die Störlichtanteile der 0-ten und -1-Ordnung sowie höherer Ordnungen mit einer anderen Ausbreitungsrichtung effizient absorbiert werden.

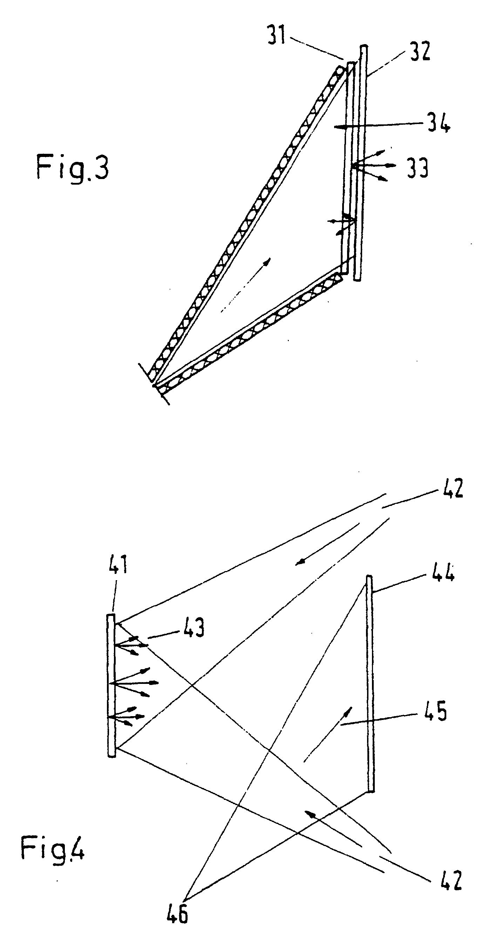

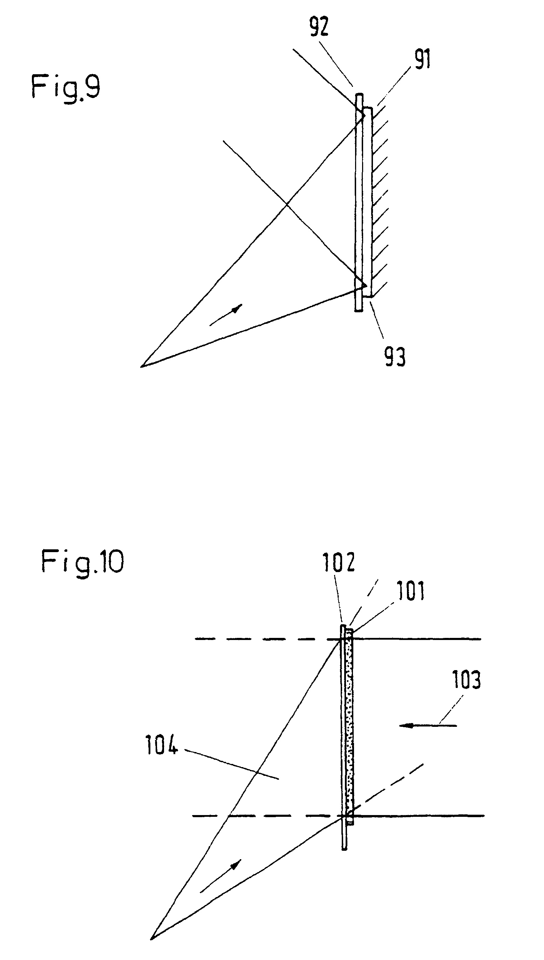

Eine zweite von der Erfindung vorgeschlagene Anordnung zeigt Fig. 3, die bis auf den Zusatz eines Reflexionshologramms in den anderen Einzelheiten der Fig. 1 entspricht. Hier wird zusätzlich ein Reflexionshologramm 32 in den Strahlengang hinter dem Transmissionshologramm 31 in Richtung zum Zuschauer eingefügt. Dieses Reflexionshologramm kann nun beispielsweise als ein selektiver holografischer Spiegel, der selektiv die verwendeten Wellenlängen reflektiert, ausgeführt sein und/oder beispielsweise als Reflexionshologramm des diffus streuenden Bildschirmes, der bereits für das Transmissionshologramm verwendet wurde, aber hier als Reflexionshologramm das Licht der 0-ten und -1-ten Ordnung zurückweist, ausgelegt werden. Seine Herstellung wird in Fig. 9 und Fig.10 dargestellt und weiter unten beschrieben. Das Reflexionshologramm, das nur als Volumenhologramm mit seiner besonderen Selektivität der Einstrahlrichtung realisiert werden kann, wird hier als Trennscheibe benutzt, die alle Laserstrahlen, die noch aus der Richtung des Projektionsortes (0-te Ordnung) ausgehen, zurückstreut, aber die Strahlen, die vom dem vorgeschalteten Transmissionshologramm umgelenkt worden sind (1-te Ordnung), durchläßt. Da diese letztgenannten diffusen Strahlen aus dem Transmissionshologramm über einen größeren Winkelbereich verteilt sind, muß in der Auslegung der Strahlengänge dafür Sorge getragen werden, daß die Strahlrichtungen dieses Nutzlichtes sich deutlich von der Strahlrichtung der 0-ten Ordnung absetzen.

Fig. 4 zeigt die Aufnahme eines Schirmhologramms in einem Aufbau nach Leith und Upatniek. Der Objektschirm 41 wird hier mit den Strahlen 42 beleuchtet. Das vom Schirm ausgehende Streulicht 43 beleuchtet das Hologramm. Als Referenz dient ein divergenter Referenzstrahl 45, der vom gleichen Ort 46 ausgeht, wie der Projektionsstrahl bei der Wiedergabe. Nach der Entwicklung des Hologramms kann es direkt als ein virtuelles Bild des Schirmes benutzt werden, wobei das Schirmbild am gleichen Ort wie der Objektschirm erscheint.

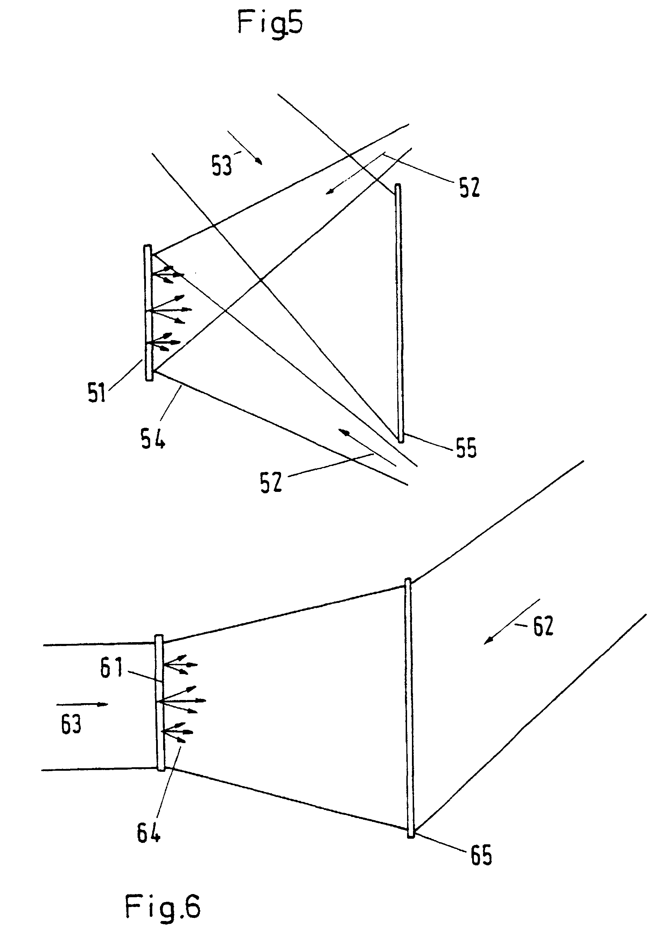

Fig. 5 zeigt die Aufnahme eines Transmissionsmasterhologramms eines diffus rückstreuenden Schirms 51 für das erfindungsgemäße zweistufige Herstellungsverfahren beispielhaft mit zwei Beleuchtungsstrahlen 52. Hier tritt das Referenzlicht 53 wie beim Leith - Upatniek Verfahren von der gleichen Seite wie das Streulicht des Schirmes 54 auf die Hologrammplatte 55.

Fig. 6 zeigt die Aufnahme eines Masterhologramms eines transparenten Schirms 61 in Reflexionstechnik für ein analoges zweistufiges Herstellungsverfahren. Hier trifft das Referenzlicht 62 von der entgegengesetzten Seite auf die Hologrammplatte 65 wie das Objektlicht 64. Die Beleuchtung des Schirms 63 geschieht hier vorzugsweise von hinten, wobei sich z.B. Vorteile bezüglich der Lichtstärke der Anordnung ergeben und korrigierende Maßnahmen bezüglich der Streulichtverteilung leicht möglich sind.

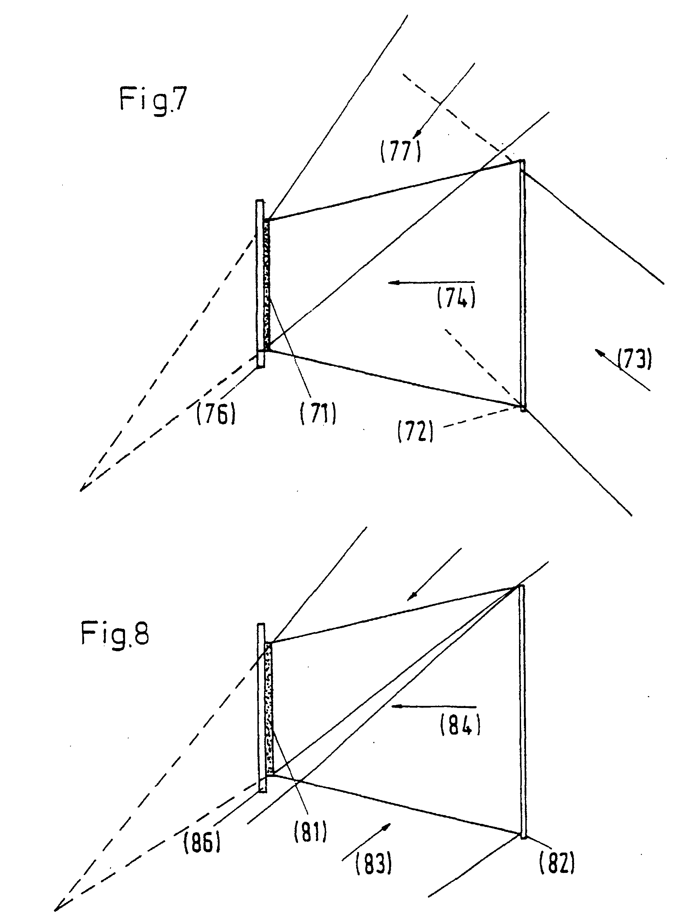

Fig. 7 zeigt das "Umkopieren" des Transmissionsmasters in einen holografischen Projektionsschirm als Bildebenenhologramm des Originalschirms. Hierzu wird ein reelles Bild des Schirms 71 durch den zur Referenz konjugierten Rekonstruktionsstrahl 73 vom Transmissionshologramm 72 erzeugt und am Ort des reellen Bildes das holografische Aufnahmematerial 76 plaziert und zusätzlich mit einem Referenzstrahl 77 beleuchtet, der in seiner Geometrie der späteren Projektionsgeometrie entsprechen muß, wie bereits oben ausgeführt wurde.

In Fig. 8 ist der analoge Vorgang des Umkopierens bei Verwendung eines Reflexionsmasters dargestellt. Hierzu wird wiederum ein reelles Bild des Schirms 81 durch den zum Referenzstrahl der Aufnahme konjugierten Rekonstruktionsstrahl 83 erzeugt und am Ort des Bildes das holografische Aufnahmematerial 86 plaziert und zusätzlich zu diesem Objektlicht mit einem Referenzstrahl 87 beaufschlagt, der wiederum in seiner Geometrie der späteren Reflexionsgeometrie entsprechen muss.

Fig. 9 zeigt die holografische Aufnahme eines Spiegels 91 als Objekt, der als Zusatzhologramm gebraucht wird in der Anordnung nach Fig. 3, um die durch das Transmissionshologramm durchgehende O-te Ordnung zurückzuweisen. Hier wird die Richtung der Reflexion durch die Einstellung des Einfallswinkels des Referenzstrahles 92 gegen die Hologrammplate 93 bestimmt.

Wie oben bereits beschrieben, kann dies vorzugsweise auch mit Hilfe eines Reflexionshologramms von dem Schirm durchgeführt werden, der z. B. schon zur Aufnahme des Transmissionshologramms des Schirms verwendet wurde. Fig. 10 zeigt die Aufnahme eines solchen Reflexionshologramms 102 des Schirmes 101, der als Zusatzhologramm in dem Aufbau nach Fig. 3 verwendet werden kann. Vorzugsweise wird hier ein transparenter streuender Schirm 101 verwendet, der im Durchlicht 103 beleuchtet wird. Die Lage des Referenzstrahles 104 ist die gleiche wie später bei der Bildprojektion.

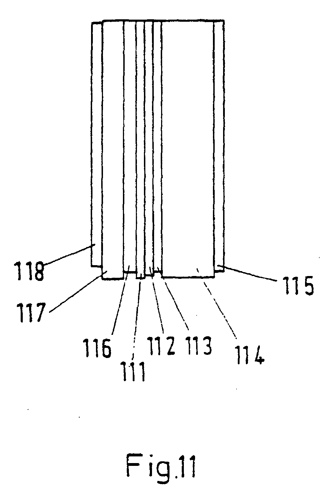

In Fig. 11 ist noch ein Querschnitt durch einen fertigen holografischen Projektionsschirm für den beispielhaften Fall dargestellt, dass drei Aufnahmeschichten für die Farben rot 11, grün 112 und blau 113 verwendet werden. Der holografische Schirm ist vorzugsweise ein Sandwich aus einer transparenten Trägerschicht 114, z.B. aus Glas oder Acrylglas, die mit einer Vergütung (Entspiegelungsschicht) 115 versehen ist, mit den holografischen Schichten (111,112, 113) und einer, gegebenenfalls durch eine brechzahlangepasste Klebe oder Zwischenschicht 116 befestigten zweiten transparenten Platte 117 zum Schutz der Hologrammschichten, die ebenfalls mit einer Vergütung 118 versehen ist. Das Zusatzhologramm zur Unterbindung der 0-ten Ordnung nach Fig. 1 kann gleichzeitig auf die äußere Trägerplatte aufgebracht bzw. auch getrennt hergestellt und dann an die erste Platte 117 optisch angekittet werden.

Es kann anstatt von drei verschiedenen Schichten für die drei Farben auch eine einzige holografische Schicht vorhanden sein, in der drei Gitterstrukturen für drei Farben niedergelegt sind, oder aber andere Schicht- und Farbkombinationen. Wie oben ausführlich dargestellt, können die einzelnen Farben zuzuordnenden Aufnahmeflächen auch in Tripelpunkten lateral nebeneinander, analog zu Farbphosphoren von Fernsehröhren, auf einer gemeinsamen Trägerplatte angebracht sein. Als Aufnahmematerial für die "dünnen" Hologramme eignen sich z.B. Silberhalogenidmaterial und Photoresist. Für die "dicken" Hologramme kommen vorzugsweise Silberhalogenidmaterial, Dichromat - Gelatine oder Photopolymer- Material in Frage.

Die Herstellung der beugenden holografischen Gitterstrukturen für die drei Grundfarben kann grundsätzlich mit drei Lasern in diesen Grundfarben durch gleichzeitige oder aufeinanderfolgende Belichtung in eine oder mehrere Aufzeichnungsschichten erfolgen, wenn die nachfolgende Weiterverarbeitung farbgetreu erfolgt, d.h. die Wiedergabewellenlänge der holografischen Gitter nach erfolgter Verarbeitung gleich der Aufnahmewellenlänge ist. Erfolgt bei der Verarbeitung jedoch eine Schrumpfung oder Schwellung der Schichten, so verschieben sich die Wiedergabewellenlängen. Dies kann, wie dem Fachmann bekannt. auch zur Erzeugung holografischer Gitterstrukturen für unterschiedliche Farben bei Belichtung mit nur einer Laserwellenlänge, durch vorheriges oder nachfolgendes Schwellen oder Schrumpfen der Aufzeichnungsschichten, ausgenutzt werden.

Der Ort des Referenz - Ausgangspunktes bei der Belichtung des holografischen Projektionsschirms richtet sich nach dem späteren erwünschten Aufstellungsort des Projektors. Projektions- bzw. Scanwinkel können je nach Anwendung unterschiedlich sein, z.B. 30° x 30° oder 45° x 45°. Unterschiedliche Winkel in Azimuth und Elevation können ebenfalls realisiert werde. Diese geometrischen Parameter fließen in die Aufnahmegeometrie ein.

Der Abstrahlwinkel des Projektionshologramms des Bildschirmes kann je nach Anwendung unterschiedlich sein, z.B. vertikal +/- 10° und +/- 45 horizontal. Diese Winkel können mit Hilfe von optischen Zusatzelementen in dem Strahlengang entweder des Referenz - oder des Objektstrahles während der Aufnahme eingestellt werden, wie bereits oben dargestellt wurde.

Durch den Einbau von optischen Zusatzelementen im Strahlengang des Referenz - oder Objektstrahles kann das holografische Bild ebenfalls beeinflußt werden, z.B. in der Helligkeitsverteilung der Wiedergabe oder zur gezielten Korrektur von Bildfehlern des Projektors.

Die Schirmvorlage für die holografischen Aufnahme braucht nicht plan zu sein. Es können gekrümmte Schirmoberflächen und für spezielle Projektionen beliebig dreidimensional geformte Flächen verwendet werden, wie z.B. die Oberflächen von Litfaßsäulen oder Gipsköpfen.

An die Stelle von interferenzoptisch aufgezeichneten Masterhologrammen können auch computergenerierte, bzw. von computergenerierten Hologrammen erzeugte Hologramme treten, in die rechnerisch eine bestimmte Streufunktion niedergelegt worden ist.

Es versteht sich nach dem vorgesagten, daß der holografische Schirm im Sinne der Erfindung für eine oder mehrere Laserlinien verwendet werden kann. Diese Laserlinien müssen nicht zwingend im sichtbaren Spektrum liegen, sondern können bei Verwendung von geeigneten Aufnahmemateralien auch im UV- oder IR - Bereich, zur Aufnahme von Bildern mit technischen Sensoren wie Kameras, Photodetektoren oder Photodetektorarrays dienen.

Obwohl meist hohe Anforderungen an die spektrale Schmalbandigkeit (zeitliche Kohärenz ) der Beleuchtungsquelle für die Bildschirmaufnahme gestellt werden, können bei der Wiedergabe, sowohl Lichtquellen mit einzelnen scharfen Spektrallinien wie Laser oder Gasentladungslampen als auch gefilterte breitbandige Lampen wie Halogen- und Glühlampen verwendet werden.

Der erfindungsgemäße holografische Bildschirm hat beispielsweise mindestens ein holografisches Oberflächengitter. Er kann auch drei holografische Oberflächengitter aufweisen, die drei Grundfarben zugeordnet sind. Weiterhin kann er drei holografische Volumengitter in einer Schicht oder in mehreren Schichten enthalten. Auch kann er andere Kombinationen von holografischen Schichten und zugeordneten Grundfarben aufweisen.

Vor dem Transmissionshologramm in Richtung zum Betrachter kann eine Lamellenblendenfolie vorgestellt sein, die Störlicht aus dem Transmissionshologramm und von der Betrachterseite absorbiert. Ebenso kann vor dem Transmissionshologramm in Richtung zum Projektor eine Lamellenblendenfolie vorgestellt sein, die Störlicht von der Betrachterseite absorbiert.

Das Volumenreflexionshologramm kann als holografischer Spiegel, der die Störstrahlung gerichtet reflektiert, ausgelegt sein. Auch kann z.B. das Reflexionshologramm als Reflektor, der die Störstrahlung diffus reflektiert, ausgelegt sein.

Bilder können z.B. durch serielles Punktabtasten (Punktscannen) eines modulierten Bildstrahles auf dem Schirm erzeugt werden, oder es können Bilder durch paralleles Zeilenabtasten (Zeilenscannen) einer modulierten Bildzeile auf dem Schirm erzeugt werden. Auch können Bilder durch flächenhafte raumfeste Projektion einer Bildmatrix eines Lichtventilmodulators auf dem Schirm erzeugt werden.

Anstatt Laserquellen bei der Bildwiedergabe können schmalbandige Leuchtdioden als Lichtquellen verwendet werden.

Zur Bildwiedergabe kann eine spektral gefilterte breitbandige Lampe verwendet werden.

Bei dem erfindungsgemäßen Verfahren zur Herstellung eines holografischen Bildschirms kann das Objekt z.B. ein diffus reflektierender Schirm sein, mit dem ein Transmissionsmaster hergestellt wird. Auch kann das Objekt ein diffus transmittierender Schirm sein, mit dem ein Transmissions oder Reflexionsmaster hergestellt wird.

Bei der Aufnahme des Schirmhologramms aus dem Master kann die Bildebene des Schirmes in der Ebene des Hologramms liegen. Auch kann bei der Aufnahme des Schirmhologramms aus dem Master die Bildebene des Schirmes vor der Ebene des Hologramms liegen. Ebenso kann bei der Aufnahme des Schirmhologramms aus dem Master die Bildebene des Schirmes hinter der Ebene des Hologramms liegen.

Es können z.B. optische Elemente im Referenzstrahlengang eingebaut werden, die Bildfehler eines Laserscanners kompensieren. Auch können optische Elemente im Referenzstrahlengang eingebaut werden, die Bildfehler bei flächenhafter Projektion einer Bildmatrix kompensieren.

## Patentansprüche

1. Holografischer Bildschirm für die Laserrückprojektion mindestens einer oder mehrerer Laserwellenlängen, wobei der holografische Bildschirm mindestens ein holografisches Transmissionsgitter (12; 21; 31;72; 82) aufweist, das an einen Lichtabsorber (17; 22) gekoppelt ist, und das Transmissionsgitter selektiv eine einfallende schmalbandige Laserstrahlung in einen vorherbestimmten Raumwinkel diffus vorwärts streut und gleichzeitig für störendes, spektral breitbandiges Umgebungslicht durchlässig ist, und wobei das Transmissionsgitter des holografischen Bildschirms durch holografische Aufnahme eines reellen Bildes (71; 81) eines in einem Hologramm (55; 61) einbelichteten Bildschirms (51; 61) hergestellt ist, wobei zur Herstellung des Transmissionsgitters (12; 21; 31;72; 82) ein holografisches Aufnahmematerial (76; 86) am Ort des reellen Bildes (71; 81) platziert wird.

2. Holografischer Bildschirm nach Anspruch 1, wobei er mindestens eine zusätzliche transparente Trägerschicht und/oder Vergütungsschicht (Entspiegelungsschicht) aufweist.

3. Holografischer Bildschirm nach Anspruch 1 oder 2, wobei er mindestens ein holografisches Volumengitter aufweist.

4. Holografischer Bildschirm einer oder mehrerer der vorhergehenden Ansprüche; wobei er drei holografische Volumengitter aufweist, die drei Grundfarben zugeordnet sind.

5. Holografischer Bildschirm nach einem oder mehreren der vorhergehenden Ansprüche, wobei er mindestens ein Amplitudengitter oder anteilmäßiges Amplitudengitter aufweist, das die Rolle des Lichtabsorbers ganz oder teilweise übernimmt.

6. Holografischer Bildschirm nach einem oder mehreren der vorhergehenden Ansprüche mit einer Lamellenblendenfolie, die Störlicht absorbiert.

7. Holografischer Bildschirm nach einem oder mehreren der vorhergehenden Ansprüche, wobei vor dem Transmissionshologramm in Richtung zum Betrachter ein Volumenreflexionshologramm vorgestellt ist, das Störlicht aus dem Transmissionshologramm in Richtung zum Lichtabsorber reflektiert.

8. Holografischer Bildschirm nach einem oder mehreren der vorhergehenden Ansprüche, wobei der Lichtabsorber als Hohlraumabsorber den Raum und Strahlengang hinter der Projektionsfläche auf das Transmissionshologramm bis auf die Eintrittsöffnung des Projektionsstrahles auf das Hologramm lichtdicht umschließt.

9. Holografischer Bildschirm nach einem oder mehreren der vorhergehenden Ansprüche, wobei Bilder durch Abtasten eines modulierten Bildstrahles auf dem Schirm erzeugt werden.

10. Verfahren zur Herstellung eines holografischen Bildschirms für die Laserrückprojektion einer oder mehrerer Laserwellenlängen, der selektiv eine einfallende schmalbandige Laserstrahlung in einen vorherbestimmten Raumwinkel diffus vorwärts streut und gleichzeitig störendes, spektral breitbandiges Umgebungslicht hindurchlässt, mit den Schritten:
- Aufnahme eines Masterhologramms (55; 65) als Transmissions- oder Reflexionsmaster, bei dem ein diffus reflektierender Schirm (51; 61) als Objekt der holografischen Aufnahme verwendet wird, wobei die Aufnahme mit divergentem Referenzstrahl (53; 62) erfolgt,
- Erzeugen eines reellen Bildes (71; 81) des Schirms (51; 61) aus dem Masterhologramm (55; 61), und
- Durchführen einer zweiten holografischen Aufnahme, bei der das reelle Bild (71; 81) des Schirms (51; 61) als Objekt verwendet wird, um ein holografisches Transmissionsgitter (72; 82) zu erzeugen, und koppeln des Transmissionsgitters an einen Lichtabsorber (17; 22).

11. Verfahren zur Herstellung eines holografischen Bildschirms nach Anspruch 1 bis 9, wobei ein Masterhologramm in einem zweistufigen Verfahren zur Herstellung des holografischen Bildschirms verwendet wird.

12. Verfahren nach Anspruch 10 oder 11, wobei in mindestens einem der Aufnahmeschritte durch optische Zusatzelemente im Strahlengang Helligkeitsverteilung und Bildfehler korrigiert werden.

13. Verfahren nach einem oder mehreren der Ansprüche 10 bis 12, wobei durch Mehrstrahlbeleuchtung des Schirms die Gesamtstreulichtverteilung des holografischen Bildschirms eingestellt wird.

14. Verfahren nach einem oder mehreren der Ansprüche 10 bis 13, wobei durch optische Zusatzelemente in der Schirmbeleuchtung die Gesamtstreulichtverteilung des holografischen Bildschirms eingestellt wird.

15. Verfahren nach einem oder mehreren der Ansprüche 10 bis 14, wobei ein computergeneriertes Hologramm zur Herstellung des holografischen Bildschirms verwendet wird.

## Claims

1. Holographic display screen for laser back-projection with at least one or more laser wavelengths, wherein the holographic display screen has at least one holographic transmission grating (12; 21; 31; 72; 82) which is coupled to a light absorber (17; 22), and the transmission grating selectively scatters incident narrow-band laser radiation diffusely forwards into a predetermined solid angle and, at the same time, is transparent to perturbing spectrally broad-band ambient light, and wherein the transmission grating of the holographic display screen is produced by holographic recording of a real image (71; 81) of a display screen (51; 61) exposed in a hologram (55; 61), a holographic recording material (76; 86) being placed at the position of the real image (71; 81) in order to produce the transmission grating (12; 21; 31; 72; 82).

2. Holographic display screen according to Claim 1, having at least one additional transparent support layer and/or blooming layer (anti-reflection layer).

3. Holographic display screen according to Claim 1 or 2, having a holographic volume grating.

4. Holographic display screen according to one or more of the preceding claims, having three holographic volume gratings, which correspond to three primary colours.

5. Holographic display screen according to one or more of the preceding claims, having at least one amplitude grating or a proportionate amplitude grating, which fully or partially fulfils the role of the light absorber.

6. Holographic display screen according to one or more of the preceding claims, with a lamellar diaphragm film which absorbs stray light.

7. Holographic display screen according to one or more of the preceding claims, a volume reflection hologram being placed in front of the transmission hologram, in the direction of the observer, reflecting stray light from the transmission hologram in the direction of the light absorber.

8. Holographic display screen according to one or more of the preceding claims, the light absorber as a cavity absorber enclosing the space and beam path behind the projection surface onto the transmission hologram in a light-tight fashion, apart from the entry opening of the projection bream onto the hologram.

9. Holographic display screen according to one or more of the preceding claims, images being generated by scanning a modulated image beam on the display screen.

10. Method for producing a holographic display screen for laser back projection with one or more laser wavelengths, which selectively scatters an incident narrow-band laser radiation diffusely forwards into a predetermined solid angle and, at the same time, transmits perturbing spectrally wide-band ambient light, with the steps:
- recording a master hologram (55; 65) as a transmission or reflection master, during which a diffusely reflecting screen (51; 61) is used as the object of the holographic recording, the recording being carried out with a divergent reference beam (53; 62),
- generating a real image (71; 81) of the screen (51; 61) from the master hologram (55; 61)
- carrying out a second holographic recording, during which the real image (71; 81) of the screen (51; 61) is used as the object, in order to generate a holographic transmission grating (72; 82), and coupling the transmission grating to a light absorber (17; 22).

11. Method for producing a holographic display screen according to Claims 1 to 9, a master hologram being used in a two-stage method for producing the holographic display screen.

12. Method according to Claim 10 or 11, brightness distribution and image aberration being corrected by additional optical elements in the beam path in at least one of the recording steps.

13. Method according to one or more of Claims 10 to 12, the overall scattered-light distribution of the holographic display screen being adjusted by multiple-beam illumination of the screen.

14. Method according to one or more of Claims 10 to 13, the overall scattered-light distribution of the holographic display screen being adjusted by additional optical elements during the screen illumination.

15. Method according to one or more of Claims 10 to 14, a computer-generated hologram being used for producing the holographic display screen.

## Revendications

1. Ecran holographique de rétroprojection laser d'au moins une ou plusieurs longueurs d'onde laser, l'écran holographique présentant au moins un réseau de transmission holographique (12, 21, 31, 72, 82) couplé à un absorbeur de lumière (17, 22), et le réseau de transmission diffusant de manière diffuse en avant un rayonnement laser incident à bande étroite de manière sélective dans un angle solide prédéfini, et laissant en même temps passer la lumière ambiante parasite spectrale à large bande, et le réseau de transmission de l'écran holographique étant créé par un enregistrement holographique d'une image réelle (71, 81) d'un écran (51, 61) exposé dans un hologramme (55, 61), un matériau d'enregistrement holographique (76, 86) étant placé à l'endroit de l'image réelle (71, 81) pour créer le réseau de transmission (12, 21, 31, 72, 82).

2. Ecran holographique selon la revendication 1, présentant au moins une couche support supplémentaire transparente et/ou une couche antireflet (traitement antireflet).

3. Ecran holographique selon l'une quelconque des revendications 1 ou 2, présentant au moins un réseau volumique holographique.

4. Ecran holographique selon l'une quelconque ou plusieurs des revendications précédentes, présentant trois réseaux volumiques holographiques associés à trois couleurs primaires.

5. Ecran holographique selon l'une quelconque ou plusieurs des revendications précédentes, présentant au moins un réseau d'amplitude ou un réseau d'amplitude en partie proportionnel qui prend entièrement ou partiellement en charge le rôle d'absorbeur de lumière.

6. Ecran holographique selon l'une quelconque ou plusieurs des revendications précédentes, avec un diaphragme à lamelles qui absorbe la lumière parasite.

7. Ecran holographique selon l'une quelconque ou plusieurs des revendications précédentes, avec représenté avant l'hologramme de transmission dans la direction de l'observateur, un hologramme de réflexion volumique qui réfléchit la lumière parasite de l'hologramme de transmission en direction de l'absorbeur de lumière

8. Ecran holographique selon l'une quelconque ou plusieurs des revendications précédentes, l'absorbeur de lumière entourant de manière étanche à la lumière l'espace en tant qu'absorbeur de vide et la trajectoire du faisceau derrière la surface de projection sur l'hologramme de transmission jusqu'à l'ouverture d'entrée du rayon de projection sur l'hologramme.

9. Ecran holographique selon l'une quelconque ou plusieurs des revendications précédentes, les images étant créées par balayage d'un rayon d'image modulé sur l'écran.

10. Procédé pour la création d'un écran holographique de rétroprojection laser d'au moins une ou plusieurs longueurs d'onde laser, diffusant de manière diffuse en avant un rayonnement laser incident à bande étroite de manière sélective dans un angle solide prédéfini, et laissant en même temps passer la lumière ambiante parasite spectrale à large bande selon les étapes suivantes :
- enregistrement d'un hologramme maître (55, 65) comme maître de transmission ou de réflexion dans le cas duquel un écran (51, 61) réfléchissant de manière diffuse est utilisé comme objet de l'enregistrement holographique, l'enregistrement étant réalisé avec un faisceau de référence divergent (53, 62),
- création d'une image réelle (71, 81) de l'écran (51, 61) à partir de l'hologramme maître (55, 61), et
- réalisation d'un deuxième enregistrement holographique dans lequel l'image réelle (71, 81) de l'écran (51, 61) est utilisée comme objet, afin de créer un réseau de transmission (72, 82) holographique et un couplage du réseau de transmission vers un absorbeur de lumière (17, 22).

11. Procédé de création d'un écran holographique selon l'une quelconque des revendications 1 à 9, un hologramme maître étant utilisé dans un procédé en deux étapes pour la création de l'écran holographique.

12. Procédé selon la revendication 10 ou 11, le réglage de la luminosité et les distorsions optiques étant corrigés par des éléments supplémentaires optiques dans la trajectoire du faisceau lors d'au moins l'une des étapes d'enregistrement.

13. Procédé selon l'une quelconque ou plusieurs des revendications 10 à 12, le réglage total de la lumière diffusée de l'écran holographique étant réglé par l'éclairage de l'écran à plusieurs faisceaux.

14. Procédé selon l'une quelconque ou plusieurs des revendications 10 à 13, le réglage total de la lumière diffusée de l'écran holographique étant réglé par des éléments optiques supplémentaires dans l'éclairage de l'écran.

15. Procédé selon l'une quelconque ou plusieurs des revendications 10 à 14, un hologramme généré par ordinateur étant utilisé pour créer l'écran holographique.
